# EUROPEAN PATENT APPLICATION

(11) **EP 2 333 027 A1**
(43) Date of publication of application: **15.06.2011**
(21) Application number: 10194318.1
(22) Date of filing: 09.12.2010
(51) Int. Cl.: C09K 8/60, C09K 8/68, C09K 8/70

(54) **Viscoelastic fluids containing hydroxyethyl cellulose**

(30) Priority: 11.12.2009 CA 2688202
(71) Applicant: BAKER HUGHES INCORPORATED, Houston, TX 77019-2118 (US)
(72) Inventor: Rieb, Bradley, Calgary Alberta T3H 2W2 (CA); Plasier, Ronald Casey, Calgary Alberta T2C 4A2 (CA); Delorey, John Roland, Calgary Alberta T2J 2M7 (CA)
(74) Representative: Lucas, Brian Ronald

(57) **Abstract**

An aqueous viscoelastic fluid for enhancing the productivity of a subterranean formation contains, in addition to an anionic surfactant and a cationic surfactant, hydroxyethyl cellulose (HEC). The fluid may be pumped neat into the formation, foamed with nitrogen to qualities exceeding 90% or emulsified with liquid carbon dioxide to emulsion quality approaching 90%.

## Description

### Field of the Invention

The present invention relates to viscoelastic fluids useful in the fracturing of subterranean formations and includes foamed and emulsified fluids which exhibit high viscosity.

### Background of the Invention

Subterranean formations of oil and gas wells are often treated by hydraulically fracturing the formations to increase the production of oil or gas. Fracturing of the formations is accomplished by pumping fluids into the bore holes of the oil or gas wells under high pressure so that cracks or fissures are opened into the surrounding formation. The fluids preferably are loaded with proppants in order to wedge open the cracks or fissures in the formation, and thereby permanently increase permeability and the flow of hydrocarbons from the oil or gas well. The viscosity of fracturing fluids is preferably high such that effective volumes of proppant may be carried in the fluid. The fracturing fluid's viscosity is proportionally related to the created fracture geometry and fracture width so that more viscous fluids will produce longer and wider fractures.

The fracturing fluid is typically an aqueous gel or a hydrocarbon gel which contains polymer. Such fluids are typically formed by gelling one or more crosslinkable polymers in the aqueous or hydrocarbon fluid. While such fluids are often effective, their use normally requires extensive well clean up. For instance, polymers often leave residues that form cakes which clog the well. In addition, such polymers often leave undesirable traces in the recoverable hydrocarbons that may be expensive to remove.

More recently, interest has shifted to polymer free fluids. Such fluids are much less damaging and clean up faster than fracturing fluids which contain polymers. For instance, U.S. Patent Nos. 6,468,945 and 6,410,489 disclose viscoelastic fluids containing a cationic surfactant and an anionic surfactant which may be foamed or emulsified. Such fluids exhibit low dynamic surface tension, are tolerant of recycled treatment water and further are fully compatible with KCl treatment fluids. In addition, such fluids form viscoelastic gels quickly and may be mixed batch-wise in advance or on-the-fly. In addition, such fluids are effective at low surfactant loadings and, at such low surfactant loadings, are easily foamed or emulsified using 50%-96% by volume of gas or liquid CO₂.

While such fluids are suitable for use in conventional oil and gas reservoirs, improved performance of such fluids, especially in non-conventional shale gas and oil, coal bed methane is desired. Such alternatives are particularly desired in shallow, brittle shales where water cost, availability and disposal has become prohibitively expensive and environmental unacceptable.

### Summary of the Invention

The flow of recoverable hydrocarbons from a subterranean formation may be increased by introducing into the formation during stimulation an aqueous fluid containing an anionic surfactant and a cationic surfactant and hydroxyethyl cellulose (HEC) to create a fracture. The aqueous fluids described herein have particular applicability in the treatment of low permeability reservoirs including shallow brittle shales, coal bed methane wells as well as conventional reservoirs.

The anionic surfactant of the fluid is preferably sodium xylene sulfonate and the cationic surfactant is preferably a C₁₀ to C₂₄ alkyl trialkyl ("the alkylated moiety") quaternary ammonium chloride salt. In a most preferred embodiment, the alkyl group forming the alkylated moiety is a C₁₈ alkyl.

The aqueous fluid may be mixed with from 5% to 96% or more of gaseous foaming agent or liquid CO₂ to form a foam, emulsified or energized fluid. Suitable foaming agents include nitrogen and carbon dioxide. The gelled fluid exhibits good foaming characteristics at low loadings, such as about 2 L/m³, for each of the anionic and cationic surfactants.

### Brief Description of the Drawings

In order to more fully understand the drawings referred to in the detailed description of the present invention, a brief description of each drawing is presented, in which:

FIG. 1 shows the effect of increased viscosity at 30°C of a viscoelastic fluid described herein which contains cationic and anionic surfactants and hydroxyethyl cellulose (HEC) in contrast to a similar viscoelastic fluid which does not contain HEC. FIG. 1 also demonstrates that a synergy exists between HEC and the viscoelastic fluid and that viscosity is adversely affected when guar is used (instead of HEC).

FIG. 2 shows the viscosity profile of a nitrogen foamed viscoelastic surfactant containing cationic and anionic surfactants with and without HEC at 30°C; and

FIG. 3 shows the viscosity profile at 30°C of a CO₂ emulsified viscoelastic surfactant which contains cationic and anionic surfactants with and without HEC.

### Detailed Description of the Preferred Embodiments

The addition of hydroxyethyl cellulose (HEC) to an aqueous fracturing fluid containing an anionic surfactant and a cationic surfactant improves the viscosity of the fluid over a wide range of temperatures. The HEC is preferably of high molecular weight. Generally the average molecular weight of the HEC polymer ranges from about 0.75 x 10⁶ to about 2 x 10⁶, preferably from about 1.4 x 10⁶ to about 1.6 x 10⁶, most preferably about 1.5 X 10⁶. The amount of HEC polymer added to the aqueous fracturing fluid is between from about 0.25 to about 5.0 kg/m³. The resulting fluid is viscoelastic and micellar in nature.

The anionic surfactant is preferably sodium xylene sulfonate. The cationic surfactant described herein is typically a C₁₀ to C₂₄ alkyl trialkyl quaternary ammonium chloride salt. The alkyl group forming the alkylated moiety can be a C₁₀ to C₂₄ alkyl group, preferably a C₁₂ to a C₂₀ alkyl. In a most preferred embodiment, the alkyl group forming the alkylated moiety is a C₁₈ alkyl.

Typically, aqueous solutions of the anionic surfactant and the cationic surfactant are used. The volume ratios of cationic surfactant solution to anionic surfactant solution are dependent on the amount of surfactant in solution. Typically, the volume ratio of cationic surfactant solution to anionic surfactant solution is typically between from 0.5:1 to 10:1, preferably from 1:1 to 2:1 (based on a 50 vol. % solution of cationic surfactant and a 40 vol. % solution of anionic surfactant).

The surfactants are typically mixed with water and blended together "on the fly" during a fracturing treatment. The water acts as the external phase of the fluid when emulsified or foamed.

At total surfactant loadings of up to about 6%, but usually less than 1%, the fluid exhibits the requisite viscosity for fracturing and effective transport of proppant at temperatures between from about 10° C to about 100° C.

In one embodiment, the cationic surfactant solution is added to the water in a quantity of from about 2 L/m³ to about 30 L/m³ and the anionic surfactant solution is added to the water in quantities of about 2.0 L/m³ to about 30 L/m³ (based on a 50 vol. % solution of cationic surfactant and a 40 vol. % solution of anionic surfactant).

The resulting viscoelastic gel is capable of transport of conventional proppants such as sand, resin coated sand and sintered bauxite as well as ultra lightweight proppants having an apparent specific gravity of less than about 2.45, such as ground or crushed shells of nuts like walnut, coconut, pecan, almond, ivory nut, brazil nut, etc.; ground and crushed seed shells (including fruit pits) of seeds of fruits such as plum, olive, peach, cherry, apricot, etc.; ground and crushed seed shells of other plants such as maize (e.g., corn cobs or corn kernels), etc.; processed wood materials such as those derived from woods such as oak, hickory, walnut, poplar, mahogany, etc., including such woods that have been processed by grinding, chipping, or other form of particalization, processing, etc. Further the proppant may include porous ceramics or organic polymeric particulates. The porous particulate material may be treated with a non-porous penetrating material, coating layer or glazing layer. For instance, the porous particulate material may be a treated particulate material, as defined in U.S. Patent Publication No. 20050028979 wherein (a) the ASG of the treated porous material is less than the ASG of the porous particulate material; (b) the permeability of the treated material is less than the permeability of the porous particulate material; or (c) the porosity of the treated material is less than the porosity of the porous particulate material. When present, the amount of proppant in the well treatment fluid is typically between from about 0.5 to about 20.0, preferably between from about 1 to about 12, pounds of proppant per gallon of the viscoelastic fluid.

When treating a subterranean formation which is sensitive to water (such as dry coal beds), it is often necessary to minimize the amount of water in the well treatment fluid by energizing with either nitrogen or liquid carbon dioxide (CO₂), foaming with a gas, such as nitrogen or emulsifying the fluid with liquid CO₂. Typically, the word "energized" refers to a fluid containing two phases whereby less than 63 volume percent of the internal phase is either a gas or a liquid (e.g. nitrogen or liquid CO₂). Typically, the term "foamed" refers to a fluid that contains more than 63 volume percent of the internal phase is either a gas or a liquid. Suitable foamed fluids typically have a foam quality greater than or equal to 70%, preferably up to 95% when nitrogen is used and greater than or equal to 70%, preferably up to 85% when liquid CO₂ is used. Foaming a fluid increases the viscosity of the fracturing fluid and allows for a reduction in the amount of water without loss of treatment fluid volume. Further, it is believed that the presence of the HEC in the fluid modifies the surfactant film on the bubbles or dispersed droplets in the foam and emulsion to provide increased foam and emulsion viscosity. While nitrogen and liquid CO₂ are described as examples of a suitable gas or liquid that can be used for the internal phase of the foamed fluid it is to be appreciated that in accordance with the invention, any other gases or fluids known in the art may be utilized.

In a preferred embodiment (based on a 50 vol. % solution of cationic surfactant and a 40 vol. % solution of anionic surfactant), the loadings of each of the anionic and cationic surfactants solutions in the gelled foamed, emulsified or energized fluid are about 3 L/m³. At such loadings the viscosity of the foamed fluid is at least 25 cP at room temperature. Typically, the ratio of cationic surfactant to anionic surfactant in the foamed or emulsified fluid is in the range from about 1:1 to about 2:1, by volume.

The fluid may optionally contain an inorganic salt as a clay stabilizer, such as potassium chloride, choline chloride or ammonium chloride. However, clay stabilizers, foaming agents, biocides and other additives are generally unnecessary in most cases.

The viscoelastic fluid described herein may be batch-mixed or mixed on-the-fly.

The fluid exhibits a fairly low surface tension, in the area of about 30 dynes/cm². The low surface tension of the fluid aids in rapid flow-back for cleaning up the well after fracturing.

The fluids described herein are effective as fracturing fluids in any type of well, including high pressure and low pressure wells. In a preferred embodiment, the fluid is used to treat low pressure wells. An example of low pressure wells suitable for using the viscoelastic fluid defined herein are those low pressure wells (of between about 1 to about 100 psi) such as coal bed methane wells. Such wells may or may not produce water. These types of wells are perforated in many coal seams with varying productivity in each zone.

In addition to coal, the viscoelastic fluids described herein find particular applicability in the treatment of low permeability subterranean formations, such as those comprised primarily of sandstone, limestone, dolomite, shale, siltstone, and diatomite, as well as coal. In particular, the fluids provide a robust alternative in shallow, brittle shales where water cost, availability and disposal has become increasingly expensive and environmentally unacceptable.

The following examples are illustrative of some of the embodiments of the present invention. Other embodiments within the scope of the claims herein will be apparent to one skilled in the art from consideration of the description set forth herein. It is intended that the specification, together with the examples, be considered exemplary only, with the scope and spirit of the invention being indicated by the claims which follow.

All percentages set forth in the Examples are given in terms of weight units except as may otherwise be indicated.

### EXAMPLES

### Examples 1-4.

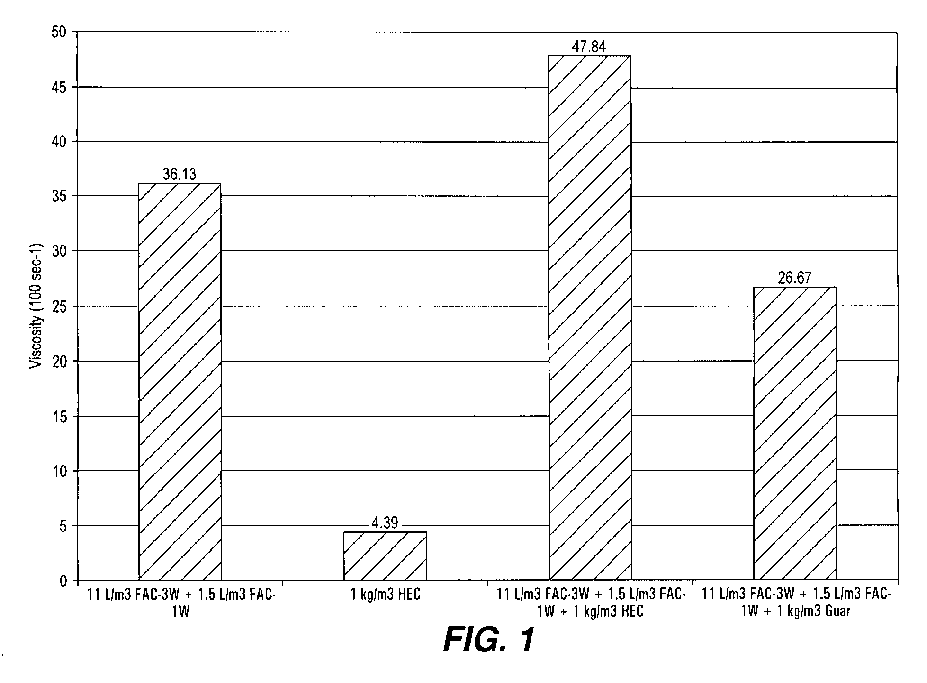

A premixed surfactant FAC-3W was prepared by mixing a 1:1 ratio of C₁₈ trimethyl quaternary ammonium chloride solution (40%, also known as FAC-1W) to sodium xylene sulfonate solution (50%), at room temperature for five minutes. To 11 L/m³ FAC-3W was added an additional 1.5 L/m³ FAC-1W. To the resulting system was then added 1 kg/m³ HEC (Example 3, FIG. 1) and 1 kg/m³ underivatized guar (Example 4, FIG. 1.) The aqueous system was then evaluated using a flow-loop rheometer which was equipped with a constant volume circulating pump and an independent air driven pump. The flow-loop was further fitted with a 10,000 psi site glass for observation. The temperature was increased to 30° C with the heating jacket on the loop. The pressure was 1,000 psi to more closely simulate well conditions. The viscosity measurements were carried out at a nominal shear rate of 100 S⁻¹. The results are illustrated in FIG. 1 wherein Comparative Example 2 shows the results of 1 kg/m³ HEC by itself. FIG. 1 demonstrates the synergy between the fluid containing the cationic surfactant/anionic surfactant (Example 1) and the same fluid containing HEC (Example 3). No synergy was seen with the fluid and guar (Example 4).

### Examples 5-6.

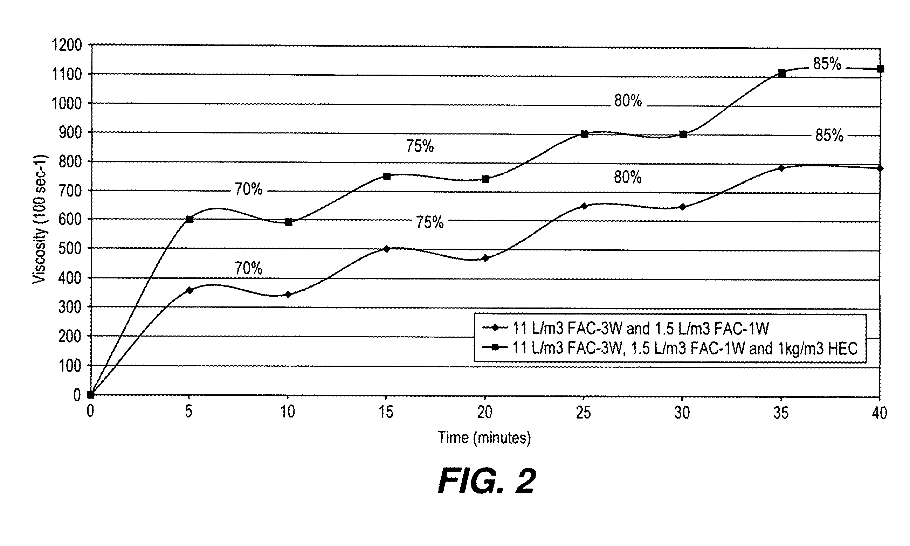

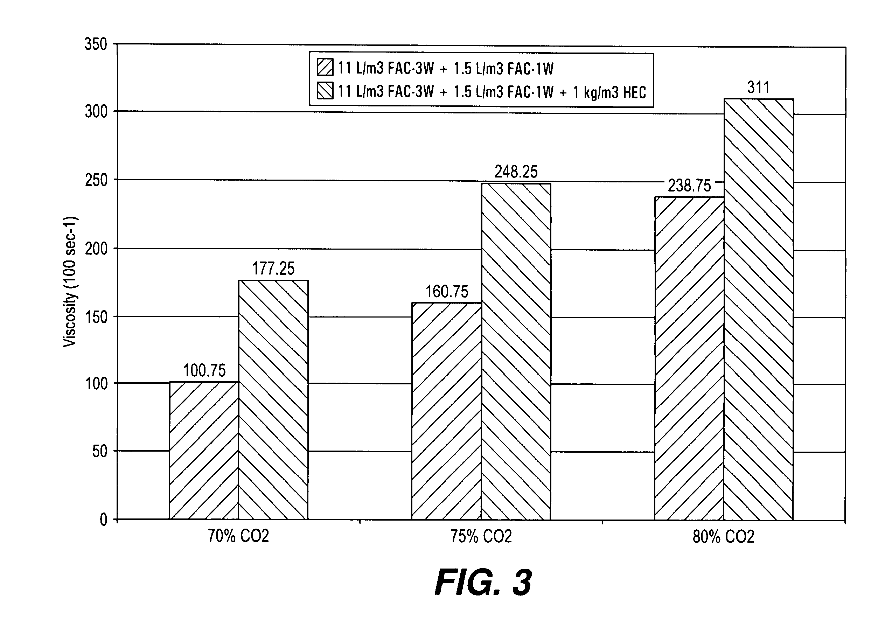

The fluid containing FAC-3W and FAC-1W (Example 1) and the fluid containing the HEC (Example 3) were then foamed with 70-85% nitrogen or 70-80% liquid CO₂. The rheology of the fluid was then evaluated using the flow-loop rheometer at 30° C described in the Examples above. In order to get a 70 quality foam, 95 mls of fluid was loaded into the flow-loop which had a 312 ml capacity. The balance was then filled with 70 vol.% N₂ gas or 70 vol.% liquid CO₂. After the N₂ or CO₂ was added, the fluid in the circulation loop was foamed/emulsified by shearing it with the aid of the nozzle and the temperature increased with the heating jacket on the loop. The pressure was 1,000 psi to more closely simulate well conditions. The viscosity measurements were carried out at a nominal shear rate of 100 s⁻¹. The results are set forth in FIG. 2 for nitrogen and FIG. 3 for liquid CO₂. FIG. 2 shows that addition of 1 kg/m³ HEC increases foam viscosity 40% to 67% depending on the nitrogen ratio. FIG. 3 shows that addition of 1 kg/m³ HEC increases emulsion viscosity from 30% to 77% depending on the CO₂ ratio. Further, the addition of 1 kg/m³ HEC increased the base gel viscosity by 21 %.

From the foregoing, it will be observed that numerous variations and modifications may be effected without departing from the true spirit and scope of the novel concepts of the invention.

## Claims

1. A viscoelastic fluid for enhancing the productivity of a hydrocarbon-bearing formation comprising:
(a) an anionic surfactant;
(b) a cationic surfactant;
(c) hydroxyethyl cellulose; and
(d) water
wherein the volume ratio of cationic surfactant in solution to anionic surfactant in solution in the fluid is from 0.5:1 to 10:1 (based on a 50 vol. % solution of cationic surfactant and a 40 vol. % solution of anionic surfactant).

2. The fluid of claim 1, wherein the anionic surfactant is sodium xylene sulfonate.

3. The fluid of claim 1 or 2, wherein the cationic surfactant is N, N, N, trimethyl-1-octadecamonium chloride.

4. The fluid of any of claims 1 to 3, wherein the volume ratio of cationic surfactant solution to anionic surfactant solution is from 1:1 to 2:1, based on a 50 vol. % solution of cationic surfactant and a 40 vol. % solution of anionic surfactant.

5. The fluid of any of claims 1 to 4, wherein the amount of cationic surfactant in the fluid is between from 2 L/m³ to 50 L/m³ and the amount of anionic surfactant in the fluid is between from 2.0 L/m³ to 30 L/m³.

6. The fluid of any of claims 1 to 5, further comprising a proppant.

7. The fluid of any of claims 1 to 6, further comprising a gas or gaseous liquid.

8. The fluid of any of claims 1 to 6, further comprising a gaseous foaming agent.

9. The fluid of claim 8 wherein, at total loadings of surfactant solutions of up to 6% by volume, the fluid delivers viscosity suitable for use as a fracturing fluid at a temperature range from 10°C to 100°C.

10. The fluid of claims 8 or 9, wherein the foaming agent is nitrogen or liquid CO₂ and is present in a quantity, by volume of 63% to in excess of 96%.

11. The fluid of any of claims 1 to 6, wherein the fluid is foamed or energized and wherein the internal phase of the foamed or energized viscoelastic fluid is between from 5 to 63 percent for energized fluids or greater than 63 percent and up to 96 percent for foamed fluids.

12. A method for enhancing the productivity of a hydrocarbon-bearing formation penetrated by a well which comprises comprising pumping into the well the viscoelastic fluid of any of claims 1 to 11.

13. The method of claim 12, wherein the well is a coal bed methane well.

14. A method of fracturing a subterranean formation which comprises pumping the viscoelastic fluid of any of claims 1 to 11 into the formation at a pressure sufficient to fracture the formation.

15. The method of claim 14, wherein the hydrocarbon-bearing formation is sandstone, coal, shale, limestone, dolomite, siltstone or diatomite.
